# DEMANDE DE BREVET EUROPEEN

(11) **EP 1 510 567 A1**
(43) Date de publication de la demande: **02.03.2005**
(21) Numéro de dépôt: 04291796.3
(22) Date de dépôt: 13.07.2004
(51) Int. Cl.: C10J 3/58, C10J 3/60, C10J 3/62, C10J 3/64, C10J 3/66, C01B 3/36

(54) **Procédé et installation de production à haut rendement d'un gaz de synthèse dépollué à partir d'une charge riche en matière organique.**

(30) Priorité: 27.08.2003 FR 0310233
(71) Demandeur: Institut Français du Pétrole, 92852 Rueil-Malmaison Cedex (FR)
(72) Inventeur: Giroudière, Fabrice, 69530 Orlienas (FR); Marty, Eric, 69005 Lyon (FR); Boudet, Nicolas, 69007 Lyon (FR)

(57) **Abrégé**

Procédé de production d'un gaz de synthèse purifié présentant un pouvoir calorifique élevé à partir d'une charge riche en matière organique, caractérisé en ce qu'il comporte, en combinaison, au moins les étapes suivantes:
a) une dégradation thermique par pyrolyse (1) de ladite charge dans des conditions amenant à la formation d'un effluent constitué d'une phase solide et d'une phase gazeuse ou gaz bruts contenant des gaz incondensables et des hydrocarbures lourds,
b) une séparation (3) des constituants de l'effluent issu de l'étape a),
c) une oxydation partielle (5) d'au moins une partie des constituants d'au moins une desdites phases.

## Description

La présente invention concerne un procédé et une installation permettant la production d'un gaz de synthèse à fort pouvoir calorifique à partir d'une charge riche en matière organique.

Plus particulièrement, l'invention se rapporte à un procédé et à une installation de traitement de gaz issus de la décomposition par effet thermique d'une charge solide dans un four, notamment par pyrolyse ou thermolyse, cette décomposition générant à la sortie du four un résidu solide et des gaz bruts pouvant contenir des composés organiques lourds à l'état de vapeur appelés goudrons, ainsi qu'éventuellement des polluants solides et gazeux.

La thermolyse ou pyrolyse est une opération de dégradation thermique qui se déroule en l'absence substantielle d'air donc d'oxygène. Elle conduit à la production de gaz bruts à moyen ou fort pouvoir calorifique et à un résidu solide riche en carbone.

Il est connu que les procédés de pyrolyse génèrent des gaz combustibles qui contiennent cependant des produits lourds non convertis dans des proportions substantielles et un résidu solide. Ces produits sont difficilement valorisables du fait, d'une part, des polluants qu'ils contiennent et, d'autre part, de leurs faibles pouvoirs calorifiques.
Par exemple, dans le cas de la conversion par pyrolyse, la teneur en goudrons est comprise entre 10 et 1000 g/Nm³ (gramme par normal mètre cube) en fonction de la charge et des conditions opératoires.

De manière à augmenter le rendement énergétique de telles installations, on connaît déjà, par exemple de par la demande de brevet EP-A2-0864349, un dispositif proposant de réaliser une opération de thermolyse suivie d'une opération de craquage thermique, le craquage thermique ayant pour but de convertir les produits lourds contenus dans les gaz bruts.
Dans ce type de dispositif, les conditions réactionnelles nécessaires au craquage sont très sévères, les températures étant supérieures à 900°C, ce qui conduit malgré tout à un rendement énergétique global faible de l'installation et à des difficultés technologiques de réalisation. En outre, ces procédés thermiques d'élimination des goudrons ne permettent pas d'éliminer les polluants susceptibles d'être présents dans les gaz, comme les poussières et les gaz acides.
Bien entendu, toutes ces difficultés ont une incidence directe sur les performances des installations ainsi que sur leurs coûts.

La présente invention a pour objet la production avec un haut rendement d'un gaz dépollué, c'est-à-dire exempt de poussières et/ou de gaz acides, à partir d'une charge riche en matière organique.
Plus précisément, l'objet de la présente invention est de produire un gaz combustible riche valorisable, dépourvu de produits lourds, tels que des goudrons, et de préférence dépourvu de polluants gazeux ou minéraux, tels que des gaz acides et des poussières ou cendres. Un tel gaz combustible riche peut être utilisé, par exemple, dans des installations ou procédés de production d'énergie électrique à haut rendement tels que des moteurs à gaz ou des turbines à gaz.

Dans sa forme la plus générale, l'invention concerne en particulier un procédé de production d'un gaz de synthèse purifié présentant un pouvoir calorifique élevé à partir d'une charge riche en matière organique, caractérisé en ce qu'il comporte au moins les étapes suivantes:
a) une dégradation thermique par pyrolyse de ladite charge dans des conditions amenant à la formation d'un effluent constitué d'une phase solide et d'une phase gazeuse ou gaz bruts contenant des gaz incondensables et des hydrocarbures lourds,
b) une séparation des constituants de l'effluent issu de l'étape a),
c) une oxydation partielle d'au moins une partie des constituants d'au moins une desdites phases.

De préférence, l'étape c) peut être précédée d'une étape de récupération des gaz incondensables contenus dans la phase gazeuse.

Avantageusement, le procédé selon l'invention peut présenter par ailleurs une étape de recyclage d'au moins une partie de l'effluent issu de l'étape c) dans l'étape a) de pyrolyse.

Selon un premier mode, l'étape c) peut comprendre une oxydation partielle d'au moins une partie desdits hydrocarbures lourds de la phase gazeuse.

Selon un deuxième mode qui peut être combiné au précédent, l'étape c) peut comprendre une oxydation partielle d'au moins une partie de la phase solide.

La séparation de l'étape b) peut être mise en oeuvre par refroidissement de l'effluent issu de l'étape a).

Avantageusement, les gaz acides contenues dans la phase gazeuse peuvent être entraînés dans une phase aqueuse par un composé basique au cours de l'étape b).

Une partie de l'énergie nécessaire à ladite pyrolyse peut être selon l'invention fournie par la combustion d'une partie desdits gaz incondensables.

L'invention concerne aussi une installation de conversion d'une charge riche en matière organique comprenant des moyens de dégradation thermique par pyrolyse de ladite charge, caractérisé en ce qu'elle comprend des moyens de séparation des produits issus de la pyrolyse en au moins une phase gazeuse contenant au moins un gaz valorisable et un courant d'hydrocarbures lourds et en une phase solide, des moyens d'oxydation partielle d'au moins une partie des constituants d'au moins une desdites phases et des moyens de recyclage et d'introduction de l'effluent issu de ladite oxydation partielle dans lesdits moyens de pyrolyse.

Les moyens de dégradation thermique peuvent comprendre un compartiment arrière comprenant au moins une partie des moyens de séparation.

L'installation peut comprendre en outre des moyens de production d'énergie par combustion du gaz de synthèse issu des moyens de séparation.

Le procédé et/ou l'installation de l'invention peuvent être utilisés dans le traitement de déchets ménagers et/ou industriels, des boues de station d'épuration, de biomasse, de résidus et sous produits agricoles, des terres polluées par les hydrocarbures.

Par rapport aux dispositifs connus de l'art antérieur, l'invention présente des nombreux avantages techniques et notamment :
- la conversion d'au moins une partie, voire la majeure partie des gaz bruts et/ou du résidu solide issus des processus de thermolyse sans besoin substantielle d'apport énergétique,
- la captation de tout ou partie des gaz acides présents dans les gaz bruts,
- la captation de la majeure partie, voire la totalité, des poussières ou cendres, de telle façon que le gaz de synthèse issu du présent procédé ou en sortie de la présente installation soit sensiblement épuré, c'est-à-dire pratiquement exempt desdites poussières,
- les gaz en sortie des moyens de séparation sont dépourvus de produits lourds, de poussière et de gaz acides, ne nécessitent pas d'opération de filtration supplémentaire et peuvent être utilisés directement dans des dispositifs ou procédés de production d'énergie électrique à haut rendement, tels que des moteurs à gaz ou des turbines à gaz,
- les goudrons peuvent être convertis en gaz légers à fort pouvoir calorifique, le rendement du gaz de synthèse finalement récupéré et, par suite, le rendement énergétique de l'installation sont ainsi sensiblement accrus par rapport aux installations connues.

De façon avantageuse, le gaz généré par le procédé selon l'invention présente après traitement, des caractéristiques lui permettant d'être facilement utilisé dans de nombreuses applications énergétiques, sans que se posent les problèmes classiquement rencontrés par l'homme du métier en raison de la présence de goudrons, de poussières et de gaz acides.
En particulier le gaz de synthèse peut être comprimé et être utilisé dans un moteur à gaz ou une turbine à gaz afin de produire de l'électricité et/ou de la chaleur. Il peut également être brûlé par un brûleur associé à un moyen de production de chaleur ou utilisé pour la synthèse par réaction chimique de divers types de composés dont des carburants, par exemple par un procédé couramment appelé procédé Fischer-Tropsch.

D'autres avantages, détails, caractéristiques de l'invention apparaîtront mieux à la lecture de la description qui va suivre, faite à titre illustratif et nullement limitatif, en référence aux figures annexées parmi lesquelles :
- la figure 1 schématise un premier mode de réalisation de l'invention dans lequel les gaz bruts sont valorisés;
- la figure 2 illustre un second mode possible de réalisation de l'invention dans lequel le résidu solide est valorisé;
- la figure 3 illustre un troisième mode possible de réalisation de l'invention dans lequel le résidu solide et les gaz bruts sont valorisés.

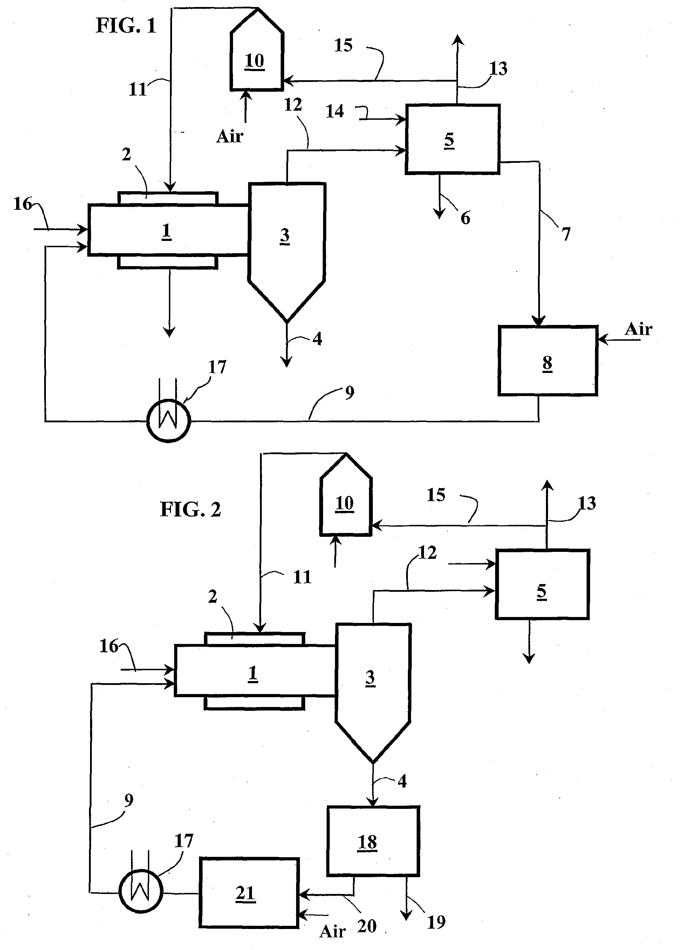

La figure 1 schématise les moyens pour la mise en oeuvre d'un premier mode de réalisation de l'invention. La description qui suit décrit un schéma fonctionnel utilisant un procédé de dégradation thermique par thermolyse.
Pour mettre en oeuvre ladite thermolyse, un four 1, préférentiellement tournant, est utilisé pour son aptitude à traiter des charges variées tant en taille qu'en composition. Le four tournant présente une souplesse qui peut permettre de l'alimenter avec une charge principale comme de la biomasse, mais également avec des mélanges de charges solides contenant de la matière organique, tels que des déchets ménagers, des déchets industriels banals, des déchets agricoles ou des boues de station d'épuration.
Bien entendu, la présente invention n'est cependant pas limitée à cet équipement et tout autre moyen permettant de mettre en oeuvre la thermolyse peut être utilisé.

Il peut être nécessaire de traiter la charge brute avant la thermolyse. Cette étape de prétraitement dépend de la nature de la charge (par exemple de sa composition, sa granulométrie, son taux d'humidité) et met en oeuvre des techniques conventionnelles telles qu'un broyage grossier, un séchage, etc... L'objectif de cette éventuelle étape de prétraitement est de mettre la charge en adéquation avec les spécifications à l'entrée du four tournant 1.

A la suite de cette éventuelle étape de prétraitement, la charge est introduite, dans le four tournant 1 à chauffage indirect par l'intermédiaire d'une ligne 16 et éventuellement d'un dispositif (non représenté) permettant de garantir l'étanchéité du four avec l'extérieur et d'empêcher ainsi toute entrée d'air dans le four. Le dispositif permettant de réaliser cette étanchéité peut être une vis d'Archimède, ou bien un système d'introduction de la charge par ballot compacté.
Le four tournant, utilisé ici pour la thermolyse, comprend une enceinte rotative entourée d'une chambre annulaire 2 pour son chauffage.
Sans sortir du cadre de l'invention, un moyen de thermolyse, tel qu'un système à grille cheminante, à table vibrante ou tout moyen connu équivalent muni d'un chauffage indirect, peut également être prévu.

Au cours de sa progression dans l'enceinte rotative 1 et sous l'action de la chaleur, la charge est progressivement débarrassée de son humidité résiduelle puis subit une dégradation thermique, qui aboutit à la formation d'une phase gazeuse (gaz bruts) et d'un résidu solide contenant du carbone (coke).
La charge et les gaz issus de la décomposition thermique circulent dans le mode de réalisation illustré par la figure 1 à co-courant dans le four. Cette opération est menée à une température comprise entre 300 et 900°C et de préférence entre 500 et 700°C, le plus souvent sous une pression égale ou voisine de la pression atmosphérique. Le temps de séjour de la charge à l'intérieur du four est suffisamment long pour permettre la dégradation totale de la matière organique. Il est en principe compris entre 30 et 180 minutes et plus précisément entre 45 et 90 minutes.
La partie arrière du four de thermolyse est reliée à un compartiment 3 configuré selon des techniques connues pour permettre de recevoir l'effluent issu du four afin de séparer et d'évacuer les gaz bruts et le résidu solide. Selon le mode de réalisation illustré par la figure 1, le résidu solide carboné est alors acheminé vers un dispositif de stockage ou de traitement (non représenté sur la figure 1) via une liaison 4. Ce résidu solide, qui contient du carbone, est évacué par un dispositif garantissant l'étanchéité vis-à-vis de l'extérieur (non représenté), par exemple une vanne rotative, un sas à vannes guillotines, ou tout autre dispositif équivalent permettant de réaliser cette opération.

Le four 1 peut être chauffé électriquement et/ou par circulation de fumées chaudes dans la chambre annulaire 2, telle que représentée sur la figure 1, ou par des brûleurs disposés dans cette chambre 2 et alimentés par tout type de combustible ou par tout autre moyen de chauffage selon des techniques connues de l'homme de l'art.
Les gaz bruts ou gaz de pyrolyse sortant du four 1 et issus de la décomposition de la charge riche en matières organiques sont, selon cet exemple de réalisation, à une température comprise entre 300 et 900°C et de préférence entre 500 et 700°C. Ces gaz bruts comprennent, le plus souvent, un mélange de vapeur d'eau résultant du séchage de la charge et des réactions de pyrolyse, de gaz valorisables incondensables à température ambiante tels que CO, CO₂, H₂, NH₃, CH₄, C₂Hₓ, voire C₃H_{y} et de vapeurs d'hydrocarbures plus lourds comportant au moins 4 atomes de carbone regroupés dans la présente description sous la désignation d'hydrocarbures lourds ou goudrons. Suivant la nature initiale de la charge, ces gaz peuvent également contenir des gaz acides, tels que HCl et H₂S ainsi que des particules en suspension.

Les gaz bruts sont évacués du compartiment de séparation 3 par une liaison 12 vers une zone 5 de séparation des gaz bruts en ses différents constituants.
Cette séparation peut avantageusement être mise en oeuvre par un simple refroidissement des gaz jusqu'à une température permettant la condensation des hydrocarbures lourds. L'échange thermique conduisant au refroidissement peut se faire soit par échange indirect, soit par échange direct avec un fluide tel que de l'eau ou une huile recyclée. Par exemple, les gaz peuvent être refroidis rapidement à une température finale comprise entre 50 et 300°C, et de préférence entre 100 et 200°C.
Sans sortir du cadre de l'invention, la température de refroidissement peut être inférieure ou supérieure à la température de vaporisation de l'eau. Dans le second cas, l'eau contenue dans les gaz bruts est évacuée avec le gaz de synthèse épuré finalement obtenu. Dans le premier cas, l'eau est comprise dans l'effluent liquide obtenu après refroidissement.
Dans le cas ou les gaz bruts comprennent en outre une quantité jugée trop importante en gaz acides, tels que HCl et H₂S et notamment dans le cadre du respect de certaines normes environnementales, des moyens d'introduction 14 d'un composé basique, tel que la soude NaOH, peuvent être compris dans la zone 5. Dans ce cas, les gaz acides sont entraînés dans la phase liquide aqueuse obtenue.
De manière économique, la séparation entre les différents constituants de la phase liquide aqueuse issue de ladite condensation dans la zone 5 peut être effectuée par une simple décantation entre la phase hydrocarbonée comprenant les goudrons et la phase aqueuse comprenant éventuellement les composés acides. Ladite séparation peut également être réalisée par d'autres moyens connus, tels qu'une ou plusieurs colonnes de distillation, avec ou sans décantation préalable.

En sortie de la zone 5, on obtient :
- un gaz traité et refroidi (ligne 13), essentiellement constitué de gaz légers incondensables à la pression atmosphérique, tels que CO, CO₂, H₂, CH₄, C₂Hₓ, exempt de goudrons et de gaz acides et présentant un haut pouvoir calorifique,
- un effluent liquide aqueux chargé en gaz acides, éliminé par des moyens 6,
- une phase hydrocarbonée liquide sensiblement exempte de gaz acides, évacuée par une liaison 7 vers une unité 8, ladite phase comprenant les goudrons et éventuellement des cendres ou poussières issues du processus de thermolyse.

Le gaz traité et refroidi issu de la ligne 13, également exempt de poussières (cendres) et de goudron et présentant un pouvoir calorifique élevé, peut ensuite être valorisé, par exemple selon un procédé dans lequel il est utilisé dans un moteur thermique ou une turbine à gaz, associé ou non à la production d'électricité. Il peut encore être utilisé dans une chaudière pour produire de la vapeur et/ou de l'électricité.
Avantageusement, une partie du gaz finalement obtenu en sortie de la zone 5 par la ligne 13 est utilisé, via une ligne 15 et une chambre de combustion 10 pour générer et envoyer, par des moyens d'acheminement 11, les fumées de combustion vers la chambre annulaire 2 du four 1. Bien entendu, le gaz issu de la zone 5 peut tout aussi bien alimenter selon l'invention des brûleurs disposés dans cette chambre.

L'unité 8 comprend des moyens d'oxydation partielle (POx) de la phase hydrocarbonée dont la technologie est connue. Ladite oxydation partielle est généralement mise en oeuvre à des températures comprises entre 1000°C et 2000°C en présence d'un gaz oxydant qui peut être de l'air, de l'oxygène ou de l'air enrichi en oxygène. Cette étape permet de transformer les goudrons de haut poids moléculaire, de forte aromaticité et comprenant éventuellement des composés oxygénés et/ou soufrés en un gaz comprenant essentiellement des molécules comprenant un ou deux atomes de carbone (par exemple CH₄, C₂H₆, C₂H₄), de l'hydrogène, du monoxyde de carbone et du dioxyde de carbone, encore appelé syngaz. De l'eau peut être introduite dans la zone où se produit l'oxydation partielle avec pour objectif par exemple de réguler la température, de contrôler les réactions d'oxydation ou de diminuer la teneur en suies dans le syngaz finalement obtenu.
Le syngaz est ensuite refroidi au moyen d'un échangeur 17 placé sur des moyens de transfert 9 à une température la plus souvent comprise entre 500 et 1000°C puis est recyclé à l'entrée du four de thermolyse 1 par les moyens de transfert 9, fournissant ainsi par contact direct avec la charge avant ou à l'entrée du four une partie de l'énergie nécessaire à son traitement.
Une telle mise en oeuvre permet d'améliorer de façon significative le bilan thermique global de l'installation et autorise une réduction importante de la taille du four nécessaire pour effectuer ladite pyrolyse. De tels facteurs se traduisent bien sûr par un investissement initial et un coût opérationnel très inférieurs à ceux attendus pour une unité conventionnelle.

La figure 2 illustre un mode de réalisation dans lequel le résidu solide est traité dans l'unité d'oxydation partielle. Il est entendu que, sur cette figure, une numérotation identique est utilisée pour désigner des moyens exerçant des fonctions identiques ou sensiblement de même nature.
Dans le mode de réalisation illustré par la figure 2, le résidu solide issu du compartiment 3 peut être introduit de façon optionnelle dans une zone 18 de lavage permettant d'éliminer des impuretés présentes dans ledit solide, telles que des sels du chlore (CaCl₂, NaCl, KCI, etc.).
En sortie de la zone 18, on obtient une phase liquide aqueuse comprenant des polluants, évacuée par une ligne 19, et un solide épuré riche en carbone, envoyé par des moyens 20 vers une unité 21 comprenant des moyens pour l'oxydation partielle dudit solide. Cette unité, spécialement adaptée selon toute technique connue de l'homme du métier au traitement d'une charge solide, permet la décomposition de la matière carbonée contenue dans ledit solide épuré en syngaz. Ce syngaz est ensuite, sur le modèle du mode de réalisation précédent et avec les mêmes avantages, mélangé à la charge en entrée du four de pyrolyse, via la ligne 9.

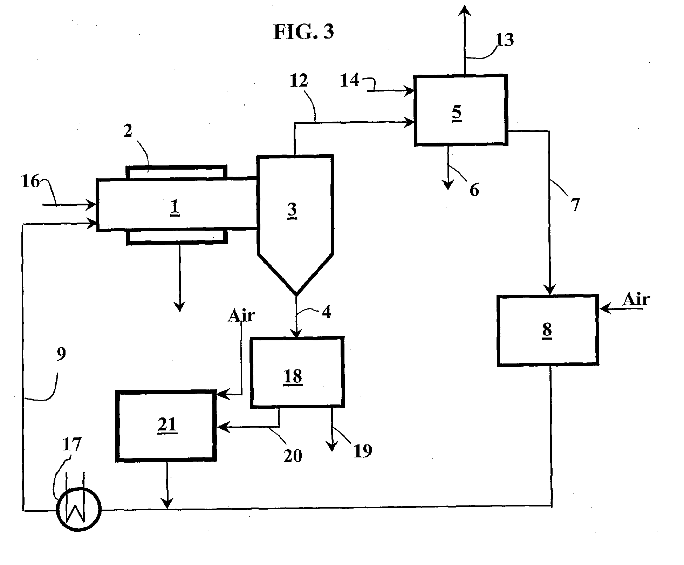

La figure 3 illustre un mode de réalisation de l'invention combinant les enseignements décrits précédemment en relation avec les figures 1 et 2 et dans lequel à la fois la phase hydrocarbonée liquide issue de la zone de séparation 5 et le résidu solide provenant du compartiment de séparation 3 sont valorisés, c'est-à-dire envoyés dans des unités comprenant des moyens d'oxydation partielle (respectivement 8 et 21). Les syngas issus desdites unités sont combinés avant d'être recyclés à l'entrée du four de thermolyse 1, en mélange avec la charge initiale.
Dans le mode de réalisation illustré par la figure 3, les moyens d'oxydation partielle 8 et 21 sont compris dans deux unités distinctes. Bien entendu, il serait possible pour des raisons économiques et sans sortir du cadre de l'invention d'utiliser une même unité pour mettre en oeuvre l'oxydation partielle de la phase gazeuse et du résidu solide, dans le cas ou celle-ci serait configurée pour traiter indifféremment des charges gazeuse ou solide.

Avantageusement, le procédé et/ou l'installation décrits précédemment sont applicables au traitement de déchets ménagers et/ou industriels, des boues de station d'épuration, de biomasse, de résidus et sous produits agricoles, des terres polluées par les hydrocarbures.

Les exemples qui suivent, illustrent certains avantages liés à la mise en oeuvre du procédé ou de l'installation selon la présente invention.

### Exemple 1 :

Cet exemple illustre la mise en oeuvre d'une installation conforme à la représentation de la figure 1.
Une charge constituée de 2538 kg/h de DIB (déchets industriels banals) séchés à 10 % d'humidité est initialement introduite dans le four tournant 1 par la ligne 16. La thermolyse est opérée à 700 °C, le temps de séjour moyen de la charge dans le four est d'environ 40 minutes, avec un taux de remplissage d'environ 17% et une vitesse de rotation nominale du four de 2,5 tr/min. Il est obtenu, en sortie du four 1 et après séparation dans le compartiment 3, un résidu solide de 787 kg/h de solides carbonés, par la ligne 4, et, par la ligne 12, un flux de 2441 kg/h de gaz bruts à 600°C.
La séparation des différents constituants des gaz bruts dans la zone 5 est obtenue par refroidissement de ces gaz bruts à une température de 55 °C par échange indirect et permet de récupérer, par la ligne 7, un débit d'huiles de 165 kg/h. Par le traitement de ces huiles, l'unité d'oxydation partielle 8 permet avec l'ajout d'un débit d'air préchauffé à 400 °C de produire un syngaz dont les caractéristiques et les propriétés sont illustrées par le tableau 1.

**Tableau 1**

| | | |
|---|---|---|
| Température ( °C ) | | 1150 |
| Débit ( kg/h ) | | 690 |
| PCi ( kJ/kg ) | | 5160 |
| Composition (% vol.) | H₂O | 2 |
| | N₂ | 50,8 |
| | CO₂ | 0,4 |
| | CO | 34 |
| | H₂ | 12,8 |

Le syngas véhiculé par la ligne 9, dont la température de sortie de l'unité d'oxydation partielle 8 est de 1150°C, est refroidi avant introduction dans le four tournant 1, par exemple par échange indirect de chaleur pour le préchauffage de l'air en entrée de l'unité 8. Il est ensuite introduit dans le four de thermolyse à 915°C, fournissant ainsi par contact direct environ 6% de l'énergie totale nécessaire au traitement de la charge introduite par la ligne 16. Ce mode de fonctionnement permet ainsi de générer un flux de gaz bruts, par la ligne 12, de 2441 kg/h dont le PCi est de 14060 kJ/kg.

De la zone de traitement 5 sont ainsi finalement extraits :
- un effluent aqueux (ligne 6) chargé en gaz acides et contenant un résidu d'huiles, dont le débit est de 589 kg/h,
- 1687 kg/h de gaz traité et refroidi (ligne 13), 59% de ce débit étant consommé dans la chambre de combustion 10 afin de générer des fumées chaudes permettant l'apport énergétique total nécessaire à l'étape de pyrolyse (alimentation de la chambre annulaire 2 du four et du sécheur (non représenté) sur la figure 1) pour amener la charge au taux d'humidité requis (10%). Le reste, soit 41% du gaz traité est directement utilisable dans un dispositif ou procédé de production d'énergie électrique à haut rendement, tel qu'un moteur à gaz ou une turbine à gaz. Le PCi de ce gaz étant de 16630 kJ/kg, la puissance thermique exportable est donc de 3,2 MW.

### Exemple 2 :

Pour cet exemple, donné à titre de comparaison, la même installation, schématisée par la figure 1, est utilisée mais l'unité 8 d'oxydation partielle n'est pas utilisée.

De la zone de traitement 5 sont alors issus :
- un effluent aqueux chargé en gaz acides et contenant un résidu d'huiles, dont le débit vaut 611 kg/h (ligne 6),
- un effluent d'huiles de 165 kg/h (ligne 7),
- 975 kg/h de gaz traité et refroidi (ligne 13), 73,7% de ce débit étant consommé dans la chambre de combustion 10 pour générer des fumées chaudes alimentant l'espace annulaire 2 du four, puis le sécheur générant pour la charge introduite par la ligne 16.
Dans ce mode de fonctionnement non conforme à l'invention, 26,3% du gaz traité est directement utilisable dans un dispositif ou procédé de production d'énergie électrique à haut rendement, tel qu'un moteur à gaz ou une turbine à gaz. Le PCi du gaz est cette fois de 24350 kJ/kg, la puissance thermique exportable est alors de 1,7 MW.

## Revendications

1. Procédé de production d'un gaz de synthèse purifié présentant un pouvoir calorifique élevé à partir d'une charge riche en matière organique, **caractérisé en ce qu'**il comporte, en combinaison, au moins les étapes suivantes:
a) une dégradation thermique par pyrolyse de ladite charge dans des conditions amenant à la formation d'un effluent constitué d'une phase solide et d'une phase gazeuse ou gaz bruts contenant des gaz incondensables et des hydrocarbures lourds,
b) une séparation des constituants de l'effluent issu de l'étape a),
c) une oxydation partielle d'au moins une partie des constituants d'au moins une desdites phases.

2. Procédé selon la revendication 1, dans lequel l'étape c) est précédée d'une étape de récupération des gaz incondensables contenus dans la phase gazeuse.

3. Procédé selon la revendication 1 ou 2 comprenant en outre une étape de recyclage d'au moins une partie de l'effluent issu de l'étape c) dans l'étape a) de pyrolyse.

4. Procédé selon l'une des revendications 1 à 3, dans lequel l'étape c) comprend une oxydation partielle d'au moins une partie desdits hydrocarbures lourds de la phase gazeuse.

5. Procédé selon l'une des revendications précédentes dans lequel l'étape c) comprend une oxydation partielle d'au moins une partie de la phase solide.

6. Procédé selon l'une des revendications précédentes dans lequel la séparation de l'étape b) est mise en oeuvre par refroidissement de l'effluent issu de l'étape a).

7. Procédé selon l'une des revendications précédentes dans lequel les gaz acides contenus dans la phase gazeuse sont entraînés dans une phase aqueuse par un composé basique au cours de l'étape b).

8. Procédé selon l'une des revendications précédentes dans lequel une partie de l'énergie nécessaire à l'étape a) est fournie par la combustion d'une partie desdits gaz incondensables.

9. Installation de conversion d'une charge riche en matière organique comprenant des moyens (1) de dégradation thermique par pyrolyse de ladite charge, **caractérisée en ce qu'**elle comprend des moyens de séparation (3, 5, 18) des produits issus de la pyrolyse en une phase gazeuse contenant au moins un gaz valorisable (13) et un courant d'hydrocarbures lourds (7) et en une phase solide (4), des moyens d'oxydation partielle (8, 21) d'au moins une partie des constituants d'au moins une desdites phases et des moyens de recyclage (9) et d'introduction de l'effluent issu de ladite oxydation partielle dans lesdits moyens de pyrolyse (1).

10. Installation selon la revendication 9, dans laquelle lesdits moyens de dégradation thermique comprennent un compartiment arrière (3) comprenant au moins une partie (3) des moyens de séparation.

11. Installation selon l'une des revendications 9 ou 10 comprenant en outre des moyens de production d'énergie (10) par combustion du gaz valorisable (13) issu des moyens de séparation (5).

12. Application du procédé selon l'une des revendications 1 à 8 ou de l'installation selon l'une des revendications 9 à 11 au traitement de déchets ménagers et/ou industriels, des boues de station d'épuration, de biomasse, de résidus et sous produits agricoles, des terres polluées par les hydrocarbures.
